# EUROPEAN PATENT SPECIFICATION

(11) **EP 2 959 230 B1**
(45) Date of publication and mention of the grant of the patent: **19.02.2020**
(21) Application number: 13786730.5
(22) Date of filing: 01.11.2013
(51) Int. Cl.: F24H 1/50, F24H 4/04, F24D 3/18, F24D 17/00, F25B 47/02, F25B 30/02, F24F 110/12, F24F 110/22, F24F 11/42, F24D 11/02, F28F 3/14, F24D 19/10, F24F 5/00, F24D 19/00, F24D 3/08, F28D 21/00

(54) **IMPROVEMENTS TO THERMODYNAMIC SOLAR HEAT TRANSFER SYSTEMS**
VERBESSERUNGEN AN THERMODYNAMISCHEN SOLARWÄRMEÜBERTRAGUNGSSYSTEMEN
PERFECTIONNEMENTS DE SYSTÈMES DE TRANSFERT DE CHALEUR SOLAIRE THERMODYNAMIQUES

(30) Priority: 02.11.2012 GB 201219788
(43) Date of publication of application: 30.12.2015
(73) Proprietor: ASD Enterprises Limited, Grimsby, Lincolnshire DN32 0BX (GB)
(72) Inventor: DIXON, Stuart, Grimsby North East Lincolnshire DN31 2BN (GB)
(74) Representative: Stratagem IPM Limited
(86) International application number: PCT/GB2013/052859
(87) International publication number: WO 2014/068326

(56) References cited:
- EP-A1- 2 103 890
- EP-A1- 2 375 195
- CN-B- 102 128 528
- JP-A- 60 233 452
- JP-A- 2001 041 478

## Description

The present invention is directed towards improvements to heat transfer systems, commonly referred to as thermodynamic or thermodynamic solar systems, designed to transfer heat from external environments to internal environments. More particularly, although not exclusively, the present invention is directed towards such systems in use in cooler climates and where the internal environments are buildings. More particularly the heat transferred is used to heat water, either to supply a radiative heating system or as a hot water supply to kitchens and bathrooms and so on. Such buildings may include domestic dwellings. Such a system is distinct from 'air source' heat exchange systems which typically utilise fans to blow air across evaporator and/or condenser parts of the system and run air conditioning/heating units within buildings.

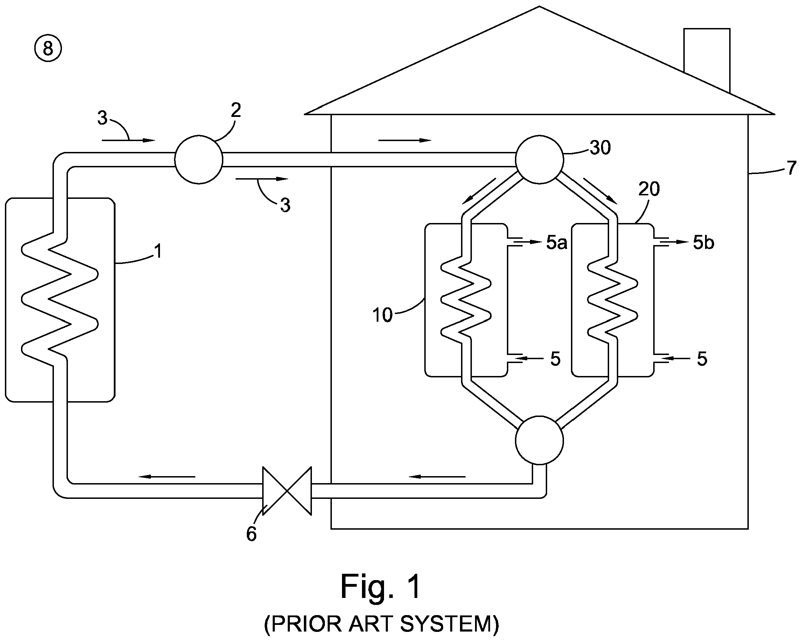

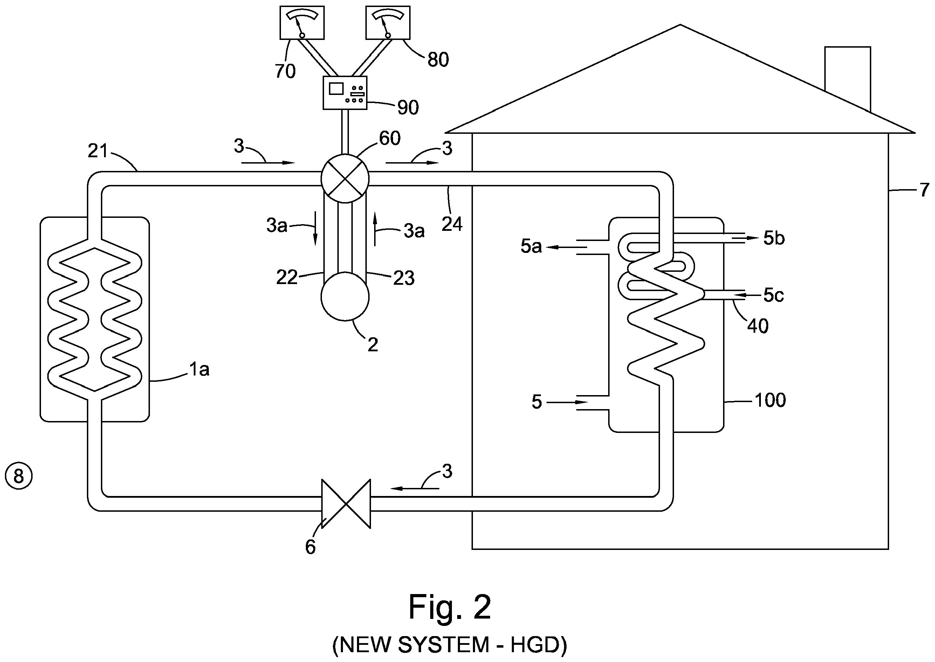

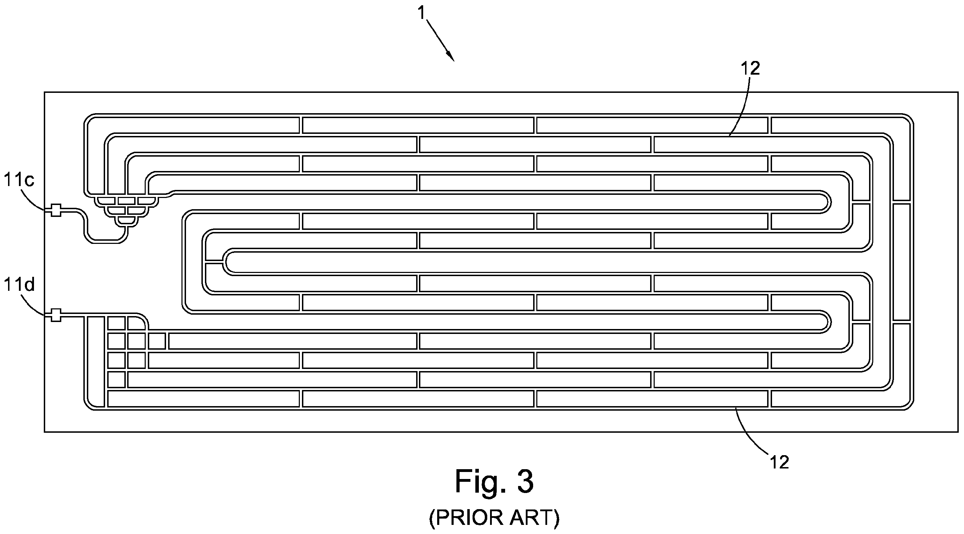

A known prior art system, illustrated in Figure 1, that is currently available comprises at least one aluminium panel (1) and a heat pump (2). A refrigerant fluid, R407c, (3) is entered to the panel as a liquid at -20°C. The panel is outside, and absorbs heat from ambient conditions (8), including the sun during daytime, which converts the liquid into a vapour. This vapour then passes into the heat pump (2), where it is compressed, raising the temperature of the vapour to approximately 80°C. This hot vapour (hot refrigerant vapour) is entered into a heat exchanger or condenser (10, 20), where the hot refrigerant vapour imparts its heat into water (5, 5a, 5b). The water temperature in the tanks (10, 20) is raised to approximately 55°C. The heated water (5a, 5b) is then used within a building (7) as a supply (5a) to heating elements such as radiators, underfloor heating systems, or swimming pool heaters, and/or as a hot water supply (5b) to kitchens, bathrooms and the like. In the illustrated example Figure 1, tank condenser 10 represents a central heating storage tank and tank condenser 20 represents a domestic hot water supply providing hot water (5b) to taps in the kitchen and bathroom of a house (7). The hot refrigerant vapour is directed as necessary to either the central heating tank (10) or the hot water tank (20) by means of a valve (30). The cooled refrigerant then passes into an expansion valve (6) before the cycle repeats. This system is in common usage in some southern European countries and has also been used in some northern European countries.

Where such a system is used in cooler climates, such as those found in some northern European countries, a problem of frosting or icing is not uncommon during cooler times of year. When the ambient outside temperature is low, and there is significant water vapour in the atmosphere, the fact that the liquid entering the panels is very cold (-20°C) results in atmospheric water vapour freezing on the surface of the panels (1) as frost or ice. This results in a problem of loss of efficiency as heat transfer into the panel is impeded by the ice on the surface. This is exacerbated where the ambient outside conditions include precipitation of one form or another, such as snow or rain. There is a further issue of a potential safety risk as such ice can build up into a significant layer during the course of, for example, a winter. When the formed ice eventually thaws, it can slip from the panel. As such panels are often mounted on roofs or otherwise raised form the ground, that is a potential hazard to people or animals that might be standing beneath them or risk of damage to other objects beneath them.

JP 60233452 discloses a solar heat collector suitable for generating hot water in at least one area of a building comprising:
at least one heat transfer panel for taking in heat from an external environment including the sun to convert a refrigerant fluid from liquid into vapour;
a heat pump for compressing refrigerant vapour from the panel into hot refrigerant vapour, and;
a condenser for transferring heat from the hot refrigerant vapour to a water supply;
an expansion valve through which, in use, cooled refrigerant vapour from the condenser passes before being supplied back into the panel
a fluid control valve having a first state in which, in use, refrigerant fluid from the panel passes through the fluid control valve into the heat pump nd then passes back through the fluid control valve into the condenser; and
control means for controlling the fluid control valve.

According to the present invention, there is provided a thermodynamic solar system characterised in that one or both of a temperature sensor (70) and/or a humidity sensor (80) for measuring ambient temperature and/or humidity conditions of the outside environment; and
wherein the control means (90) is configured for monitoring the temperature sensor (70) and/or humidity sensor (80), and
wherein the control means (90) is configured to cause the fluid control valve (60) to move from the first state to a second state in whicht the flow of refrigerant, is reversed to divert hot refrigerant vapour from the heat pump (2) back into the panel (1, 1a) when the ambient conditions measured by the temperature sensor (70) and/or humidity sensor (80) are cold enough or include sufficient air moisture for frost to form on the panel..

The diversion of hot refrigerant vapour into the panel, or hot gas defrost cycle, means that any frost that has built up on the panel due to environmental conditions can be melted away, or any ice that has built up on the panel can be loosened for controlled removal. It has been found that, in wintry conditions such as give rise to the problems previously noted, a 2-3 minute reversal of hot gas every few hours is sufficient to keep panels suitably frost-free.

A problem that newly arises as a result of this improvement is that of minimising the impact of this hot gas defrost cycle on the efficiency of the overall system. Any hot gas defrost cycle must be short in time interval and infrequent. Accordingly, in a further aspect of the invention, the heat transfer system further comprises a temperature sensor (70). This temperature sensor measures the ambient temperature conditions to which the panel is subject. The hot gas defrost cycle will only then initiate when the ambient conditions are cold enough to require it.

In a further aspect of the invention, the system comprises a humidity sensor (80). The humidity sensor measures the ambient humidity to which the panel is subject. The hot gas defrost cycle then only initiates when the ambient conditions to which the panel is subject include sufficient air moisture for frost or ice to form. This humidity sensor may operate in combination with the temperature sensor previously noted.

Preferably, the hot gas defrost cycle will only initiate when the combination of temperature and humidity are such that there is a likelihood of frost or ice forming on the panel or panels. Such a system could be automated and may comprise a computing or other control device (90) such as an Electronic Control Unit (ECU) which monitors the readings of the temperature sensor and/or humidity sensor, and regulates the time and frequency of use of the hot gas defrost cycle in response to these outputs so as to maximise the efficiency of the system, whilst still maintaining the desirable effects of the hot gas defrost cycle.

must be short in time interval and infrequent. The temperature sensor measures the ambient temperature conditions to which the panel is subject. The hot gas defrost cycle will only then initiate when the ambient conditions are cold enough to require it.

The humidity sensor measures the ambient humidity to which the panel is subject. The hot gas defrost cycle then only initiates when the ambient conditions to which the panel is subject include sufficient air moisture for frost or ice to form. This humidity sensor may operate in combination with the temperature sensor previously noted.

Preferably, the hot gas defrost cycle will only initiate when the combination of temperature and humidity are such that there is a likelihood of frost or ice forming on the panel or panels. Such a system could be automated and may comprise a computing or other control device (90) such as an Electronic Control Unit (ECU) which monitors the readings of the temperature sensor and/or humidity sensor, and regulates the time and frequency of use of the hot gas defrost cycle in response to these outputs so as to maximise the efficiency of the system, whilst still maintaining the desirable effects of the hot gas defrost cycle.

Existing system panels tend to be constructed of blown cold roll-bonded aluminium. Two flat sheets of aluminium are pressed together by mechanical rollers. A pattern of adhesive is laid on one of the flat sheets prior to the two sheets being laid together. The two sheets adhere together in accordance with the pattern - high pressure air is then forced between the sheets, and where the sheets are not bonded together, a channel is formed. Where the adhesive is laid appropriately, the channels will form a track or tracks through which, as in the prior art and present example, refrigerant can flow.

The walls (13) of the refrigerant channels of the prior art panels (1) have a typical thickness (14) of 0.7mm. In systems according to the current invention, the wall thickness has to be more typically in the region of 0.9mm. This is because the hot refrigerant vapour is at a greater pressure than the refrigerant fluid liquid or vapour passing through the panel when the system is running 'normally'. The increased wall thickness is necessary to contain the increased pressure.

In a preferred embodiment, the refrigerant is an alternative refrigerant R-134a. This has various advantages described later herein, but also requires a panel capable of handling a higher pressure than in a system running on R407c. By way of example, a prior art system runs with a nominal pressure of up to approximately 12 bar maximum in a panel (1). A system according to the current invention, utilising R134a and also capable of running the hot gas defrost cycle, requires panels (1a) capable of handling up to 25 bar.

The use of alternative refrigerant R-134a enables the system to produce hot refrigerant vapour at a higher temperature than would be obtainable with R407c. Typically, the hot refrigerant vapour can be at a temperature of up to (90°C) as opposed to the approximately 80°C of R407c as used in the prior art system.

This has the further advantage that the water supplied at the condenser (10, 20, 100) within the building area can be heated to a higher temperature than that of the prior art system, ie: 65°C as opposed to 55°C, due to the higher temperature of the hot refrigerant gas.

The existing prior art system, where it is intended to produce a hot water supply as well as hot water for heating, requires two water tank / condenser units; one for heating the hot water (20), and one for heating the water for the heating system (10). This is illustrated in Figure 1, where tank 10 is a central heating 'buffer' tank, and tank 20 is a hot water tank. The hot refrigerant gas in the system is typically available to one or the other of these tanks (10,20), depending on momentary requirement, and is directed towards one or the other tank by means of a valve (30).

Because of the fact that water for the hot water supply, in the prior art system, is stored in a tank (20), water in this tank will generally be subject to a temperature gradient. Furthermore, water in this tank may be subjected to several cycles of heating and cooling before being used and exiting the tank. Given the highest temperature point of the prior art system (55°C), there is a potential issue with Legionella, as it is commonly reckoned that Legionella bacteria can survive at this temperature for anywhere between 1 to 6 hours.

Improvements enabled by the present invention provide a solution to this potential problem. In the system according to the current invention, there is only a single water tank/condenser unit (100). As noted above, hot refrigerant gas is piped through this tank (100) at 90°C, heating the contents to 65°C. The contents of the tank are part of a sealed system and circulate around to provide radiative heat in radiators, underfloor heating, swimming pool heating and the like. Water in the upper part of this tank (due to convection) may be generally maintained at the upper temperature range of the system, ie 65°C. Within this upper region of the single tank is a secondary heat exchange coil (40) through which cold mains water is piped on a demand basis. The cold water is heated as it passes through the coil and is then available as a hot water supply to taps and so on in areas such as kitchens and bathrooms. This system obviates the requirement for the storage of hot water in a hot water storage tank 20 and reduces the risk of Legionella.
This improvement also means that only one tank/condenser unit (100) is required instead of two (10,20) to provide both heating water and hot water where this is required. This saves space, makes system installation easier and is likely to reduce cost.

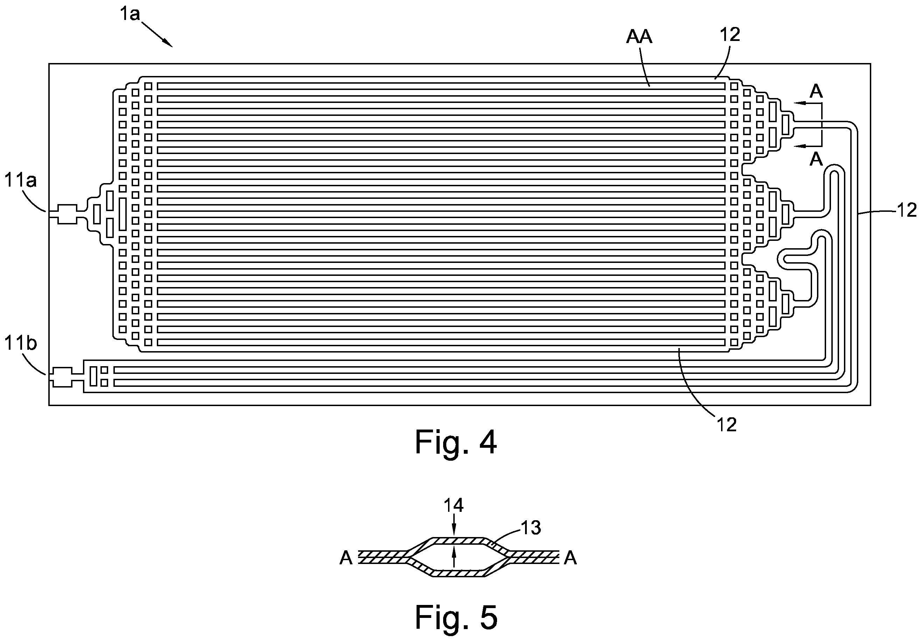

A further improvement to the prior art system is presented in the panels (1a) in the system according to the current invention. These panels are specifically designed so that they may be mounted in any orientation, in contrast to prior art panels which will only work when they are fixed in a particular orientation. The current panels are also designed with a multiplicity of potential routes for refrigerant flow. Refrigerant entering the panel through an input/output port (11a, 11b) may split so as to follow any one of a number of routes around the panel before exiting the panel through the other input/output port (11b, 11a). However, the panel is specifically designed so that any potential route around the panel from 11a to 11b (or vice versa) is the same distance. An exemplary embodiment of this is shown in Figure 4. The benefits of this design are that pressure distribution around the panel is more even than in a standard prior art panel, and the panel absorbs heat from its surroundings in a more efficient manner.

A further unclaimed use of the system would be as a means of heat distribution in a desired manner in any particular building. In a building in a warmer environment, for example, there may be a requirement to cool certain rooms in a building and provide heat to others. For example, a hotel may wish to provide cooling in some rooms for the comfort of guests when the temperature is relatively high. The same hotel may maintain a swimming pool, which it wishes to keep at a temperature higher than even the ambient environmental temperature. Accordingly, a system in accordance with the currently noted improvements, or even a prior art system, may be installed with the panel (1, 1a) in a room in which it is desired to lower the temperature. The system is otherwise as previously noted, with a condenser unit sited in another room and arranged so as to provide hot water to a swimming pool heating circuit. Similar arrangements may be made so as to provide central heating, underfloor heating, or even a hot water supply to other parts of the same building or even a building complex comprising a number of separate buildings. Cooling by means of the panel in one building, for example, may be provided, with the heat removed used to maintain a sauna in another building. The Hot Gas Defrost function in accordance with the current invention may be 0.7mm. In an exemplary embodiment of the current invention, the thickness of these walls is 0.9mm.

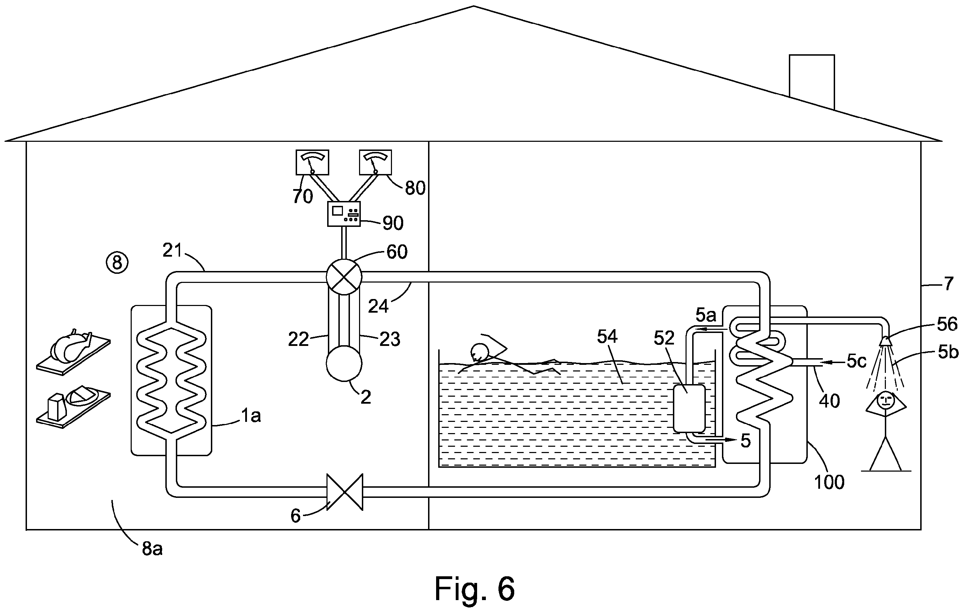

Figure 6 shows an alternative system which is not part of the invention, wherein the environment (8) in which the panel (1/la) is situated is one room (8a) within a building. In this instance, the panel (1/la) is providing cooling for this room, which is a larder (8a). Tank 100 is providing hot water (5a) for a heating circuit (52) for heating a swimming pool (54), and hot water (5b) produced by the coil (40) is supplying a shower area (56).

Note that references to buildings, houses and/or dwellings are not intended to be limiting - it will readily be appreciated that various structures or collections of structures could have such systems installed and that the components of such systems may sit on or within a variety of locations, the reference drawings being non-limiting. Panels and sensors may sit on the outside of a building or on a pole or other structure next to a building. Various components of the system (heat pump, evaporator, for example), may be open to the elements or sit in wooden huts next to a building or may sit within a building. Buildings may include offices, hotels, restaurants or public buildings such as museums, town halls or sports centres, as well as houses or similar dwellings.

0.7mm. In an exemplary embodiment of the current invention, the thickness of these walls is 0.9mm.

Figure 6 shows an embodiment of the improved system in accordance with the invention as previously described, wherein the environment (8) in which the panel (1/1a) is situated is one room (8a) within a building. In this instance, the panel (1/1a) is providing cooling for this room, which is a larder (8a). Tank 100 is providing hot water (5a) for a heating circuit (52) for heating a swimming pool (54), and hot water (5b) produced by the coil (40) is supplying a shower area (56).

Note that references to buildings, houses and/or dwellings are not intended to be limiting - it will readily be appreciated that various structures or collections of structures could have such systems installed and that the components of such systems may sit on or within a variety of locations, the reference drawings being non-limiting. Panels and sensors may sit on the outside of a building or on a pole or other structure next to a building. Various components of the system (heat pump, evaporator, for example), may be open to the elements or sit in wooden huts next to a building or may sit within a building. Buildings may include offices, hotels, restaurants or public buildings such as museums, town halls or sports centres, as well as houses or similar dwellings.

## Claims

1. A thermodynamic solar system suitable for generating hot water (5a, 5b) in at least one area of a building (7) comprising:
at least one heat transfer panel (1, 1a) for taking in heat from an external environment (8) including the sun, to convert a refrigerant fluid from liquid into a vapour;
a heat pump (2) for compressing refrigerant vapour from the panel into hot refrigerant vapour, and;
a condenser (10, 20, 100) for transferring heat from the hot refrigerant vapour to a water supply (5, 5c);
an expansion valve (6) through which, in use, cooled refrigerant vapour from the condenser passes before being supplied back into the panel (1, 1a);
a fluid control valve (60) having a first state in which, in use, refrigerant fluid from the panel (1, 1a) passes through the fluid control valve (60) into the heat pump (2) and then passes back through the fluid control valve into the condenser (10, 20, 100); and
control means (90) for controlling the fluid control valve (60);
**characterised in that** the heat transfer system further comprises:
one or both of a temperature sensor (70) and/or a humidity sensor (80) for measuring ambient temperature and/or humidity conditions of the outside environment; and
wherein the control means (90) is configured for monitoring the temperature sensor (70) and/or humidity sensor (80), and
wherein the control means (90) is configured to cause the fluid control valve (60) to move from the first state to a second state in which the flow of refrigerant is reversed to divert hot refrigerant vapour from the heat pump (2) back into the panel (1, 1a) when the ambient conditions measured by the temperature sensor (70) and/or humidity sensor (80) are cold enough or include sufficient air moisture for frost or ice to form on the panel.

2. A heat transfer system as claimed in claim 1 or claim 2, wherein the fluid control valve is a 4-way valve.

3. A heat transfer system as claimed in any preceding claim, wherein the refrigerant used is R-134a.

4. A heat transfer system as claimed in any preceding claim, wherein the panel is an aluminium roll-bonded panel having channels in which the refrigerant fluid flows when in use.

5. A heat transfer system as claimed in claim 4, wherein the wall thickness of the channels is greater than 0.7mm.

6. A heat transfer system as claimed in claim 4 or claim 5, wherein the wall thickness of the channels of the panel is greater than 0.9mm.

7. A heat transfer system as claimed in any of claims 4 to 6, wherein the panel is designed so that refrigerant fluid may take a number of different paths through the channels in the panel.

8. A heat transfer system as claimed in claim 7, wherein the panel is further designed so that each possible path is of substantially the same length.

9. A heat transfer system as claimed in claim 1, wherein the condenser (10, 20, 100) for the hot refrigerant gas is a tank for a domestic heating system in which a water supply (5, 5a) is heated, in use, by the hot refrigerant gas and stored, in use, in the tank, wherein the tank further comprises a coil (40) positioned towards and within the top end of the tank in which a second water supply (5c-5b) is in turn heated, in use, by the stored hot water (5a) within the tank.

10. A heat transfer system as claimed in claim 9, wherein the first water supply (5-5a) is used within a heating circuit in the building (7), the second water supply (5c-5b) is used as a hot water source.

## Patentansprüche

1. Thermodynamisches Solarsystem, das sich zur Erzeugung von Warmwasser (5a, 5b) in mindestens einem Bereich eines Gebäudes (7) eignet, wobei das System folgendes umfasst:
mindestens eine Wärmeträgerplatte (1, 1a) zur Aufnahme von Wärme aus einer äußeren Umgebung (8), darunter die Sonne, um ein Kältemittelfluid aus Flüssigkeit in einen Dampf umzuwandeln;
eine Wärmepumpe (2) zur Verdichtung von Kältemitteldampf von der Platte in warmen Kältemitteldampf;
einen Kondensator (10, 20, 100) zur Übertragung von Wärme von dem warmen Kältemitteldampf zu einem Wasservorrat (5, 5c);
ein Expansionsventil (6), durch das im Einsatz gekühlter Kältemitteldampf von dem Kondensator tritt, bevor dieser zurück in die Platte (1, 1a) geführt wird;
ein Fluidregelventil (60) mit einem ersten Zustand, in dem im Einsatz Kältemittelfluid von der Platte (1, 1a) durch das Fluidregelventil (60) in die Wärmepumpe (2) verläuft und danach zurück durch das Fluidregelventil in den Kondensator (10, 20, 100); und
ein Regelungsmittel (90) zur Regelung des Fluidregelventils (60);
**dadurch gekennzeichnet, dass** das Wärmeübertragungssystem ferner folgendes umfasst:
einen Temperatursensor (70) und/oder einen Luftfeuchtigkeitssensor (80) zum Messen der Umgebungstemperatur- und/oder Luftfeuchtigkeitsbedingungen der äußeren Umgebung; und
wobei das Regelungsmittel (90) so gestaltet ist, dass es den Temperatursensor (70) und/oder den Luftfeuchtigkeitssensor (80) überwacht; und
wobei das Regelungsmittel (90) so gestaltet ist, dass es bewirkt, dass sich das Fluidregelventil (60) aus dem ersten Zustand in einen zweiten Zustand bewegt, in dem der Kältemittelfluss umgekehrt ist, um warmen Kältemitteldampf von der Wärmepumpe (2) zurück in die Platte (1, 1a) umzuleiten, wenn die durch den Temperatursensor (70) und/oder den Luftfeuchtigkeitssensor (80) gemessenen Umgebungsbedingungen ausreichend kalt sind oder ausreichend Luftfeuchtigkeit aufweisen, so dass sich an der Platte Frost oder Eis bildet.

2. Wärmeübertragungssystem nach Anspruch 1 oder 2, wobei das Fluidregelventil ein Vierwegeventil ist.

3. Wärmeübertragungssystem nach einem der vorstehenden Ansprüche, wobei es sich bei dem verwendeten Kältemittel um R-134a handelt.

4. Wärmeübertragungssystem nach einem der vorstehenden Ansprüche, wobei die platte eine walzplattierte Aluminiumplatte mit Kanälen ist, in denen im Einsatz das Kältemittelfluid fließt.

5. Wärmeübertragungssystem nach Anspruch 4, wobei die Wanddicke des Kanals größer ist als 0,7 mm.

6. Wärmeübertragungssystem nach Anspruch 4 oder 5, wobei die Wanddicke der Kanäle der Platte größer ist als 0,9 mm.

7. Wärmeübertragungssystem nach einem der Ansprüche 4 bis 6, wobei die Platte so gestaltet ist, dass Kältemittelfluid eine Reihe unterschiedlicher Wege durch die Kanäle in der Platte nehmen kann.

8. Wärmeübertragungssystem nach Anspruch 7, wobei die Platte ferner so gestaltet ist, dass jeder mögliche Weg im Wesentlichen die gleiche Länge aufweist.

9. Wärmeübertragungssystem nach Anspruch 1, wobei der Kondensator (10, 20, 100) für das warme Kältemittelgas ein Tank für ein Haushaltsheizungssystem ist, in dem im Einsatz ein Wasservorrat (5, 5a) durch das warme Kältemittelgas erwärmt und in dem Tank gespeichert wird, wobei der Tank ferner eine Spule (40) umfasst, die in Richtung des oberen Endes des Tanks und darin positioniert ist, worin wiederum ein zweiter Wasservorrat (5c-5b) durch das in dem Tank gespeicherte warme Wasser (5a) erwärmt wird.

10. Wärmeübertragungssystem nach Anspruch 9, wobei der erste Wasservorrat (5-5a) in einem Heizkreislauf in dem Gebäude (7) verwendet wird, wobei der zweite Wasservorrat (5c-5b) als eine Warmwasserquelle verwendet wird.

## Revendications

1. Système solaire thermodynamique approprié pour générer de l'eau chaude (5a, 5b) dans au moins une zone d'un bâtiment (7) comprenant :
au moins un panneau de transfert de chaleur (1, 1a) pour capter la chaleur d'un environnement extérieur (8), y compris le soleil, pour convertir un fluide réfrigérant de liquide en vapeur ;
une pompe à chaleur (2) pour comprimer la vapeur de réfrigérant provenant du panneau en vapeur de réfrigérant chaude, et ;
un condenseur (10, 20, 100) pour transférer la chaleur provenant de la vapeur de réfrigérant chaude à une alimentation en eau (5, 5c) ;
un détendeur (6) à travers lequel, lors de l'utilisation, passe de la vapeur de réfrigérant refroidie provenant du condenseur avant d'être réintroduite dans le panneau (1, 1a);
une vanne de régulation de fluide (60) ayant un premier état dans lequel, lors de l'utilisation, le fluide réfrigérant provenant du panneau (1, 1a) passe à travers la vanne de régulation de fluide (60) dans la pompe à chaleur (2), puis revient à travers la vanne de régulation de fluide dans le condenseur (10, 20, 100) ; et
un moyen de commande (90) pour commander la vanne de régulation de fluide (60) ;
**caractérisé en ce que** le système de transfert de chaleur comprend en outre :
un capteur de température (70) et/ou un capteur d'humidité (80), pour mesurer la température ambiante et/ou les conditions d'humidité de l'environnement extérieur ; et
le moyen de commande (90) étant conçu pour surveiller le capteur de température (70) et/ou le capteur d'humidité (80), et
le moyen de commande (90) étant conçu pour amener la vanne de régulation de fluide (60) à passer du premier état à un second état dans lequel le flux de réfrigérant est inversé pour ramener la vapeur de réfrigérant chaud de la pompe à chaleur (2) vers le panneau (1, 1a) lorsque les conditions ambiantes mesurées par le capteur de température (70) et/ou le capteur d'humidité (80) sont suffisamment froides ou comprennent suffisamment d'humidité d'air pour que du givre ou de la glace se forme sur le panneau.

2. Système de transfert de chaleur selon la revendication 1 ou 2, la vanne de régulation de fluide étant une vanne à 4 voies.

3. Système de transfert de chaleur selon l'une quelconque des revendications précédentes, le réfrigérant utilisé étant le R-134a.

4. Système de transfert de chaleur selon l'une quelconque des revendications précédentes, le panneau étant un panneau en aluminium collé en rouleau ayant des canaux dans lesquels le fluide réfrigérant s'écoule lorsqu'il est utilisé.

5. Système de transfert de chaleur selon la revendication 4, l'épaisseur de paroi des canaux étant supérieure à 0,7 mm.

6. Système de transfert de chaleur selon la revendication 4 ou 5, l'épaisseur de paroi des canaux du panneau étant supérieure à 0,9 mm.

7. Système de transfert de chaleur selon l'une quelconque des revendications 4 à 6, le panneau étant conçu de sorte que le fluide réfrigérant puisse emprunter un certain nombre de chemins différents à travers les canaux dans le panneau.

8. Système de transfert de chaleur selon la revendication 7, le panneau étant en outre conçu de sorte que chaque trajet possible soit sensiblement de la même longueur.

9. Système de transfert de chaleur selon la revendication 1, le condenseur (10, 20, 100) pour le gaz réfrigérant chaud étant un réservoir pour un système de chauffage domestique dans lequel une alimentation en eau (5, 5a) est chauffée, lors de l'utilisation, par le gaz réfrigérant chaud et stockée, lors de l'utilisation, dans le réservoir, le réservoir comprenant en outre une bobine (40) placée vers et dans l'extrémité supérieure du réservoir dans laquelle une seconde alimentation en eau (5c-5b) est à son tour chauffée, lors de l'utilisation, par l'eau chaude stockée (5a) dans le réservoir.

10. Système de transfert de chaleur selon la revendication 9, la première alimentation en eau (5-5a) étant utilisée dans un circuit de chauffage dans le bâtiment (7), la seconde alimentation en eau (5c-5b) étant utilisée comme source d'eau chaude.
